# EUROPÄISCHE PATENTSCHRIFT

(11) **EP 1 746 334 B1**
(45) Veröffentlichungstag und Bekanntmachung des Hinweises auf die Patenterteilung: **03.03.2010**
(21) Anmeldenummer: 06116439.8
(22) Anmeldetag: 30.06.2006
(51) Int. Cl.: F16P 1/06

(54) **Laserschutzwand zur Abschirmung eines Laserbereiches**
Laser protection wall for shielding a laser radiation area
Paroi de protection laser pour sécuriser une zone de rayonnement laser

(30) Priorität: 21.07.2005 DE 102005034110
(43) Veröffentlichungstag der Anmeldung: 24.01.2007
(73) Patentinhaber: LASER ZENTRUM HANNOVER e.V., D-30419 Hannover (DE); Füchtenkötter, Günter, 33428 Marienfeld (DE)
(72) Erfinder: Püster, Thomas, 30455 Hannover (DE); Berend, Olaf, 30826 Garbsen (DE); Brill, Burkhard, 30159 Hannover (DE)
(74) Vertreter: Dantz, Jan Henning

(56) Entgegenhaltungen:
- EP-A2- 0 321 965
- DE-A1- 19 940 476
- DE-C1- 10 017 284
- DE-C1- 19 629 037
- GB-A- 2 203 539
- JP-A- 9 323 182

## Beschreibung

Die vorliegende Erfindung betrifft eine Laserschutzwand zur Abschirmung eines Laserbereiches gemäß dem Oberbegriff des Anspruches 1.

Laser finden in vielen Anwendungsbereichen Verwendung, beispielsweise zum Schweißen, Schneiden oder zur Oberflächenbearbeitung und stellen mittlerweile ein industrielles Standardwerkzeug dar.

Dabei werden die Laserstrahlquellen in Verbindung mit verschiedenen Handhabungssystemen eingesetzt, unter anderem an Robotern und Scanneroptiken. Im Betrieb kann es allerdings zu Fehlfunktionen der Handhabungssysteme kommen, die zu Laser-Emissionen in alle Raumrichtungen führen. Auch kann es zu unbeabsichtigten Reflexionen an Oberflächen, z.B. dem Werkstück kommen.

Aus diesem Grunde sind gesetzliche Vorgaben einzuhalten, nach denen die Gefahrenbereiche im Arbeitsbereich einer Laseranlage durch trennende Sicherheitseinrichtungen einzugrenzen sind, so dass außerhalb dieser Bereiche für Personen keine Gefährdung für Augen und Haut besteht.

Solche Sicherheitseinrichtungen werden durch Laserschutzwände gebildet, die zu Kabinen zusammengefügt sind.

Aus Kostengründen werden die Kabinen möglichst kompakt dimensioniert, das heißt, sie sind in ihren Gesamtabmaßen relativ klein gehalten. Dadurch befinden sich beispielsweise die an Robotern angeflanschten Laser-Bearbeitungsköpfe in geringem Abstand zur Innenwand der Kabine, was ebenso zu hohen Bestrahlungsstärken an der Innenwand führt wie die zunehmend längeren bzw. variableren Brennweiten der zum Einsatz kommenden Optiken.

Prinzipiell sind sogenannte passive Laserschutzwände und aktive Laserschutzwände bekannt. Eine passive Laserschutzwand wird in der DE 196 29 037 C1 beschrieben. Diese Laserschutzwand besteht doppel- oder mehrwandig aus Metall, wobei zumindest die Innenwand wenigstens auf der Innenfläche, bevorzugt auch auf der Außenfläche, mit einer Beschichtung mit einem hohen Absorptionsvermögen gegenüber Laserstrahlung versehen ist.

Allerdings ist das Schutzvermögen dieser passiven Laserschutzwand bei hohen Bestrahlungsstärken, wie sie mehr und mehr durch den zunehmenden Einsatz stärkerer Laserquellen auftreten, nicht ausreichend, um die einschlägigen Vorschriften, insbesondere hinsichtlich der Schutzdauer zu erfüllen.

Aus diesem Grund kommen aktive Laserschutzwände zum Einsatz, bei denen Laseremissionen ermittelt und bei Erreichen eines vorgegebenen Emissionswertes die Laserquelle abgeschaltet wird.

In der DE 199 40 476 A1 wird eine solche aktive Laserschutzwand beschrieben, deren Prinzip darauf beruht, dass eine Vielzahl von Temperaturmessstellen auf der innenraumseitigen Fläche der Innenwand aufgebracht ist, um die an jedem Ort der Innenraumfläche einfallende Laserstrahlung und die daraus resultierende Temperaturerhöhung der Innenwand mittels Kontaktwärmesensoren zu erkennen. Alternativ befindet sich im Innenraum mindestens ein Lichtsensor, der Laserstrahlung erkennt, die die Innenwand durchdrungen hat.

Diese Laserschutzwand hat jedoch eine Reihe von Nachteilen, die einer optimierten Herstellung und einem optimierten Betrieb entgegenstehen.

So sind eine Vielzahl von Kontakttemperatursensoren, die auf der Innenfläche der Innenwand aufgebracht sein müssen, erforderlich, um die auftreffende Laserstrahlung an einem beliebigen Ort sicher zu erkennen. Allerdings wird diese Sicherheit nur durch redundante Sensoren erreicht, was naturgemäß mit erheblichen Kosten verbunden ist. Dies ist insoweit von Bedeutung, als es aufgrund von Beschädigungen der Laserschutzwand durchaus häufiger zu einem notwendigen Austausch kommen muss.

Dabei werden die Herstellungs- bzw. Betriebskosten dieser Schutzwand sowohl durch die Vielzahl der einzusetzenden Sensoren wie auch durch deren Montage beeinflusst.

Der in der genannten Schrift alternativ vorgeschlagene Lichtsensor bedingt zur Funktionsfähigkeit, dass die Innenwand Durchbrechungen aufweist, durch die die zu ermittelnde Laserstrahlung in den Innenraum fallen kann.

Neben der komplizierten Herstellung durch das Einbringen der Durchbrechungen ergibt sich durch die Durchbrechungen eine deutlich niedrigere passive Schutzwirkung, so dass diese Laserschutzwand den geforderten Ansprüchen nicht gerecht wird.

Überdies müssen die Lichtsensoren entsprechend der jeweiligen Laserwellenlänge des eingesetzten Lasers ausgewählt werden, wodurch sich fertigungstechnische Nachteile ergeben, da eine gewünschte rationelle Fertigung nicht möglich ist.

Der vorliegenden Erfindung liegt die Aufgabe zugrunde, eine Laserschutzwand der gattungsgemäßen Art so weiter zu entwickeln, dass sie einfachst aufgebaut und kostengünstig herstellbar ist sowie einen zuverlässigen Schutz mit hoher Standzeit bildet.

Diese Aufgabe wird durch eine Laserschutzwand mit den Merkmalen des Anspruches 1 gelöst.

Im Vergleich zu passiven Laserschutzwänden, die nur durch ihren physikalischen Widerstand gegenüber Laserstrahlung schützen, zeichnet sich die neue Laserschutzwand dadurch aus, dass ausschließlich Wärmestrahlung (NIR-Strahlung) im Innenraum ermittelt wird. Diese Wärmestrahlung wird von der Innenwand abgegeben, wenn der Laserstrahl auf die Außenfläche der Innenwand auftrifft und diese lokal begrenzt erwärmt.

Wird ein vorbestimmter, eingestellter Sollwert der gemessenen Wärmestrahlung erreicht bzw. überschritten, so sendet der Sensor ein Signal, vorzugsweise über elektrische Leitungen, an die Auswerte- und Schaltereinheit, über die die Laserquelle abgeschaltet wird.

Nach einer vorteilhaften Weiterbildung der Erfindung ist vorgesehen, dass jedem Sensor ein Teststrahler zur Emission von NIR-Strahlung zugeordnet ist.

Mit Hilfe dieser Teststrahler kann die Funktionsfähigkeit der Sensoren bzw. der Signalweiterleitung überprüft werden, wobei vorzugsweise in regelmäßigen Abständen oder dauerhaft ein Teststrahler Wärmestrahlung aussendet, durch die ein gegenüberliegender Sensor geprüft wird.

Das Ergebnis der Überprüfung wird in der Auswerte- und Schaltereinheit ausgewertet.

Durch eine entsprechende Steuerungslogik mittels Diagnoseeinheiten kann bei Beschädigung der Laserschutzwand durch Laserbestrahlung oder bei Ausfall eines Sensors der entsprechende Sensor ermittelt werden, wodurch sich geringe Wartungs- und Instandsetzungskosten ergeben.

Vorzugsweise sind in einer Laserschutzwand zwei Sensoren mit zugeordneten Teststrahlern angeordnet. Diese geringe Anzahl führt zu einer äußerst kostengünstigen Herstellung der Laserschutzwand sowie minimierte Kosten bezüglich der Wartung und Instandsetzung. Überdies stellt die neue Laserschutzwand ein sicheres Schutzwandsystem für hohe Bestrahlungsstärken dar, die auch für den Einsatz in sogenannten High-Power-Laseranlagen geeignet ist.
Weitere vorteilhafte Ausbildungen sind in den Unteransprüchen gekennzeichnet.
Ein Ausführungsbeispiel der Erfindung wird nachfolgend anhand der beigefügten Zeichnungen beschrieben.

Es zeigen:
- Figur 1: eine erfindungsgemäße Laserschutzwand in einer schematischen perspektivischen Ansicht;
- Figur 2: die Laserschutzwand nach Figur 1 in einer schematischen Draufsicht, und
- Figur 3: eine vergrößert dargestellte Einzelheit der Laserschutzwand, ebenfalls in einer schematischen Draufsicht.

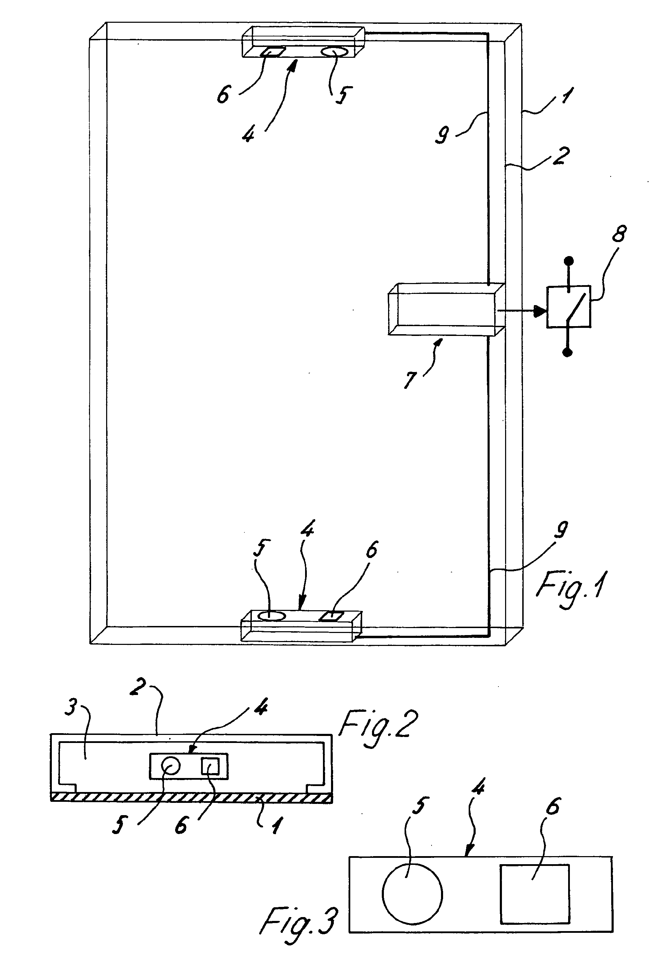

In den Figuren 1 und 2 ist eine Laserschutzwand zur Abschirmung eines Laserbereiches dargestellt, die zwei, einen vorzugsweise vollständig geschlossenen Innenraum 3 begrenzende Wände aufweist, von denen eine erste Wand eine Innenwand 1 zum Arbeitsbereich und die zweite Wand eine Außenwand 2 bildet.

Im Innenraum 3 der Laserschutzwand sind an sich gegenüberliegenden Seiten zwei Module 4 angeordnet, von denen eines in der Figur 3 vergrößert dargestellt ist und die jeweils einen Sensor 5 zur Erkennung von Nah-Infrarot-Strahlung (NIR-Strahlung) sowie einen Teststrahler 6 aufweisen, mit dessen Hilfe die Funktionsfähigkeit des gegenüberliegenden Sensors 5 sowie angeschlossener Leitungen überprüfbar ist.

Die Sensoren 5 und Teststrahler 6 sind über elektrische Leitungen 9 mit einer Auswerte- und Schaltereinheit 7 verbunden, die mit einem Schalter 8 in Wirkverbindung steht, mit dem eine Laserquelle abschaltbar ist.

Die Module 4 der Laserschutzwand werden mit Modulen anderer Laserschutzwände, die gemeinsam eine Sicherheitskabine bilden, zu einer Sicherheitssteuerung kombiniert.

Wie bereits beschrieben, trifft im Betriebsfall die von einer Laserquelle ausgesandte Laserstrahlung in einem Laserbereich auf die Innenwand 1, die dadurch lokal begrenzt erwärmt wird und Wärmestrahlung (NIR-Strahlung) in den Innenraum 3 sendet. Diese NIR-Strahlung wird von den Sensoren 5 empfangen. Bei Erreichen oder Überschreiten eines bestimmten, vorher eingestellten Schwellwertes der gemessenen NIR-Strahlung sendet der Sensor 5 über die zugeordnete elektrische Leitung 9 ein Signal an die Auswerte- und Schaltereinheit 7, mittels der dann der Schalter 8 zum Ausschalten der Laserquelle betätigt wird.

In vorgegebenen Abständen wird zur Funktionskontrolle der Sensoren 5 bzw. der Signalweiterleitung von einem Teststrahler 6 ein Sendeimpuls in Form einer NIR-Strahlung zu dem gegenüberliegenden Sensor 5 gesandt, der ein entsprechendes Signal an die Auswerte- und Schaltereinheit 7 weitergibt, in der die korrekte Funktion des Sensors 5 ermittelt wird.

### Bezugszeichenliste

- 1: Innenwand
- 2: Außenwand
- 3: Innenraum
- 4: Module
- 5: Sensor
- 6: Teststrahler
- 7: Auswerte- und Schaltereinheit
- 8: Schalter
- 9: elektrische Leitungen

## Patentansprüche

1. Laserschutzwand zur Abschirmung eines Laserbereiches mit zwei, einen Innenraum (3) begrenzenden Wänden, von denen eine erste Wand eine Innenwand (1) zum Arbeitsbereich und die zweite Wand eine Außenwand (2) bildet, **dadurch gekennzeichnet, dass** im Innenraum (3) mindestens ein oder mehrere Sensoren (5) zur Erkennung von Nah-Infrarot-Strahlung d.h. NIR-Strahlung, angeordnet sind, die mit einer Auswerte- und Schaltereinheit (7) zum Abschalten einer Laserquelle verbunden sind.

2. Laserschutzwand nach Anspruch 1, **dadurch gekennzeichnet, dass** im Innenraum (3) Teststrahler (6) vorgesehen sind, mit denen die Funktionsfähigkeit der Sensoren (5) überprüfbar ist.

3. Laserschutzwand nach Anspruch 1 oder 2, **dadurch gekennzeichnet, dass** mindestens ein Sensor (5) und mindestens ein Teststrahler (6) zu einem Modul (4) zusammengefasst sind.

4. Laserschutzwand nach einem der vorhergehenden Ansprüche, **dadurch gekennzeichnet, dass** zwei Module (4) an sich gegenüberliegenden Seiten angeordnet sind.

5. Laserschutzwand nach einem der vorhergehenden Ansprüche, **dadurch gekennzeichnet, dass** mittels eines Teststrahlers (6) eines Moduls (4) der gegenüberliegende Sensor (5) überprüfbar ist.

6. Laserschutzwand nach einem der vorhergehenden Ansprüche, **dadurch gekennzeichnet, dass** jeder Sensor (5) und jeder Teststrahler (6) über eine elektrische Leitung (9) mit der Auswerte- und Schaltereinheit (7) verbunden ist.

7. Laserschutzwand nach einem der vorhergehenden Ansprüche, **dadurch gekennzeichnet, dass** in dem Sensor (5) oder der Auswerte- und Schaltereinheit (7) ein Sollwert gespeichert ist, bei dessen Erreichen oder Überschreiten die Auswerte- und Schaltereinheit (7) bzw. der angeschlossene Schalter (8) zum Ausschalten der Laserquelle betätigbar ist.

8. Laserschutzwand nach einem der vorhergehenden Ansprüche, **dadurch gekennzeichnet, dass** die Teststrahler (6) NIR-Strahlung aussenden.

9. Laserschutzwand nach einem der vorhergehenden Ansprüche, **dadurch gekennzeichnet, dass** die Sensoren (5) und/oder die Teststrahler (6) mit Sensoren (5) und/oder Teststrahlern (6) anderer Laserschutzwände steuerungstechnisch gekoppelt sind.

## Claims

1. Laser protection wall for shielding a laser region having two walls delimiting an inner space (3), of which a first wall forms an inner wall (1) in relation to the work area, and the second wall forms an outer wall (2), **characterized in that** arranged in the inner space (3) are at least one or more sensors (5) for detecting near infrared radiation (that is to say NIR radiation) which are connected to an evaluation and switching unit (7) for disconnecting a laser source.

2. Laser protection wall according to Claim 1, **characterized in that** provided in the inner space (3) are test emitters (6) with the aid of which it is possible to check the functionality of the sensors (5).

3. Laser protection wall according to Claim 1 or 2, **characterized in that** at least one sensor (5) and at least one test emitter (6) are combined to form a module (4).

4. Laser protection wall according to one of the preceding claims, **characterized in that** two modules (4) are arranged on opposite sides.

5. Laser protection wall according to one of the preceding claims, **characterized in that** the opposite sensor (5) can be checked by means of a test emitter (6) of a module (4).

6. Laser protection wall according to one of the preceding claims, **characterized in that** each sensor (5) and each test emitter (6) is connected to the evaluation and switching unit (7) via an electric line (9).

7. Laser protection wall according to one of the preceding claims, **characterized in that** stored in the sensor (5) or the evaluation and switching unit (7) is a desired value on reaching or overshooting of which the evaluation and switching unit (7) or the connected switch (8) can be actuated to disconnect the laser source.

8. Laser protection wall according to one of the preceding claims, **characterized in that** test emitters (6) emit NIR radiation.

9. Laser protection wall according to one of the preceding claims, **characterized in that** the sensors (5) and/or the test emitters (6) are coupled for control purposes to sensors (5) and/or test emitters (6) of other laser protection walls.

## Revendications

1. Paroi de protection laser pour sécuriser une zone laser avec deux parois délimitant un espace interne (3), dont une première paroi forme une paroi interne (1) à la zone de travail et dont la deuxième paroi forme une paroi externe (2), **caractérisée en ce que** dans l'espace interne (3) sont disposés au moins un ou plusieurs détecteurs (5) destinés à la détection d'un rayonnement infra-rouge proche, c'est-à-dire d'un rayonnement PIR, lesquels détecteurs sont reliés à une unité de commutation et d'évaluation (7) destinée à la mise à l'arrêt d'une source laser.

2. Paroi de protection laser selon la revendication 1, **caractérisée en ce que** sont prévus dans l'espace interne (3) des émetteurs test (6), grâce auxquels on peut vérifier la capacité de fonctionnement des détecteurs (5).

3. Paroi de protection laser selon la revendication 1 ou 2, **caractérisée en ce qu'**au moins un détecteur (5) et au moins un émetteur test (6) sont combinés pour former un module (4).

4. Paroi de protection laser selon l'une des revendications précédentes, **caractérisée en ce que** deux modules (4) sont disposés sur des faces opposées.

5. Paroi de protection laser selon l'une des revendications précédentes, **caractérisée en ce que** l'on peut contrôler, au moyen d'un émetteur test (6) d'un module (4), le fonctionnement du détecteur (5) opposé.

6. Paroi de protection laser selon l'une des revendications précédentes, **caractérisée en ce que** chaque détecteur (5) et chaque émetteur test (6) est relié via une ligne électrique (9) à l'unité de commutation et d'évaluation (7).

7. Paroi de protection laser selon l'une des revendications précédentes, **caractérisée en ce qu'**une valeur de consigne est sauvegardée dans le détecteur (5) ou l'unité de commutation et d'évaluation (7), en cas d'atteinte ou de dépassement de laquelle on peut actionner l'unité de commutation et d'évaluation (7) et/ou le commutateur (8) qui lui est relié en vue de la mise à l'arrêt de la source laser.

8. Paroi de protection laser selon l'une des revendications précédentes, **caractérisée en ce que** les émetteurs test (6) émettent un rayonnement PIR.

9. Paroi de protection laser selon l'une des revendications précédentes, **caractérisée en ce que** les détecteurs (5) et/ou les émetteurs test (6) sont couplés du point de vue de la technique de commande à des capteurs (5) et/ ou à des émetteurs laser (6) d'autres parois de protection laser.
